# EUROPEAN PATENT APPLICATION

(11) **EP 4 592 649 A1**
(43) Date of publication of application: **30.07.2025**
(21) Application number: 24180178.6
(22) Date of filing: 05.06.2024
(51) Int. Cl.: G01H 9/00, G01D 5/353

(54) **DIRECT CONTROL ON LASER FREQUENCY FOR DUAL-PULSE DISTRIBUTED ACOUSTIC SENSING (DAS)**

(30) Priority: 23.01.2024 EP 24305128; 28.05.2024 US 202418675841
(71) Applicant: Viavi Solutions Inc., Chandler, AZ 85286 (US)
(72) Inventor: LECOEUCHE, Vincent, 42660 Tarentaise (FR)
(74) Representative: Murgitroyd & Company

(57) **Abstract**

In some examples, a direct control on laser frequency for dual-pulse distributed acoustic sensing (DAS) apparatus may include at least one laser to transmit a laser signal. A semiconductor optical amplifier (SOA) may be operatively connected to the at least one laser to generate a plurality of pulses. A laser signal controller that is executed by at least one hardware processor may apply, between two pulses of the plurality of pulses, a relatively small-step to obtain laser signal emitted changes of optical frequency.

## Description

### BACKGROUND

Distributed Acoustic Sensing (DAS) may be implemented along a fiber optic cable to perform continuous and real-time measurements. DAS may utilize the optical fiber itself to perform distributed sensing. DAS may be implemented for detection of acoustic frequency strain signals over relatively long distances and in relatively severe environments.

### BRIEF DESCRIPTION OF DRAWINGS

Features of the present disclosure are illustrated by way of example and not limited in the following figure(s), in which like numerals indicate like elements, in which:
Figure 1 illustrates a layout of a direct control on laser frequency for dual-pulse distributed acoustic sensing (DAS) apparatus, in accordance with an example of the present disclosure;
Figure 2 illustrates further details of the direct control on laser frequency for dual-pulse DAS apparatus of Figure 1, in accordance with an example of the present disclosure;
Figure 3 illustrates a dual-port layout of another example of a direct control on laser frequency for dual-pulse DAS apparatus, in accordance with an example of the present disclosure;
Figure 4 illustrates a multi-port layout of another example of a direct control on laser frequency for dual-pulse DAS apparatus, in accordance with an example of the present disclosure;
Figure 5 illustrates a multi-lambda variant of another example of a direct control on laser frequency for dual-pulse DAS apparatus, in accordance with an example of the present disclosure;
Figure 6 illustrates another multi-lambda variant of a direct control on laser frequency for dual-pulse DAS apparatus, in accordance with an example of the present disclosure;
Figure 7 illustrates a phase step variant of another example of a direct control on laser frequency for dual-pulse DAS apparatus, in accordance with an example of the present disclosure; and
Figure 8 illustrates a flowchart of an example method for direct control on laser frequency for dual-pulse DAS, according to examples.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

Direct control on laser frequency for dual-pulse distributed acoustic sensing (DAS) apparatuses, methods for direct control on laser frequency for dual-pulse DAS, and non-transitory computer readable media having stored thereon machine readable instructions to provide direct control on laser frequency for dual-pulse DAS are disclosed herein. The apparatuses, methods, and non-transitory computer readable media disclosed herein provide for control of laser frequency directly to create pairs of pulses for DAS. The apparatuses, methods, and non-transitory computer readable media disclosed herein provide an optical scheme that eliminates the need for an acousto-optic modulator (AOM) that may be utilized for the purpose of pulsing/shifting. By changing the current applied directly to a laser, and with two pulses being applied to a semiconductor optical amplifier (SOA), a frequency or phase shifted pulse pair may be created. The apparatuses, methods, and non-transitory computer readable media disclosed herein may be utilized with integrated optics, and/or for a broad range of frequencies (e.g., in the GHz range). Further, the apparatuses, methods, and non-transitory computer readable media disclosed herein also provide for probing of several fibers and oversampling.

According to examples disclosed herein, the apparatuses, methods, and non-transitory computer readable media disclosed herein may implement a µstep approach. In this regard, a dual-pulse radio-frequency (RF) beat technique may provide some advantages over direct-current (DC) coupled detection schemes. With respect to the dual-pulse RF beat technique, there may be no tailing of an RF signal (while strong tailing occurs at Fresnel reflections, compromising the response over tens of meters after an event). With respect to Dual-pulse RF beat technique, AC coupling of a receiver signal may remove strong DC terms of an amplifier's amplified spontaneous emission (ASE) and its low-frequency fluctuations (e.g., erbium-doped fiber amplifiers (EDFA) gain/ASE recovery after an energetic pulse).

With respect to the dual-pulse scheme as disclosed herein, the µstep as disclosed herein may replace the frequency-shift step of the AOM favorably. Limited bandwidth of AOM may mean low frequency beat (e.g., an AOM driven at 200 and 240MHz makes a 40 MHz beat, with extra insertion loss associated with mis-tuning). In this regard, several AOMs combined may achieve higher shifts.

For the dual-pulse scheme as disclosed herein, an electro-optic modulator (EOM) may be used for higher frequencies, but poor extinction may require an extra gating (e.g., two EOMs or EOM+AOM)

The dual-pulse scheme as disclosed herein may provide for wide control on frequency with µstep. Higher frequencies may be utilized as many periods of oscillation are available to determine phase (e.g., within spatial resolution 10ns/1m).

For the dual-pulse scheme as disclosed herein, many frequencies over a broad range may provide for RF spectral multiplexing/encoding.

For the dual-pulse scheme as disclosed herein, a pulser may be shared among different lasers at different wavelengths, each with a different beat frequency (e.g., different µ steps) allowing encoding/decoding per wavelength and optical routing (e.g., wavelength-division multiplexing (WDM).

With respect to the dual-pulse scheme, based on the RF/wavelength encoding, several pulses may be sent in a time shorter than the round-trip time in a single fiber, therefore increasing acoustic sampling.

For the dual-pulse scheme, with RF/wavelength encoding, several fibers may be probed based on WDM routing, possibly still with several wavelengths per fiber to also allow over-sampling as disclosed herein.

With respect to the dual-pulse scheme, a bandwidth in the range of 50-200MHz may be utilized for one DAS signal and one wavelength. Several wavelengths may be implemented to exploit the full bandwidth (GHz) of a single receiver.

With respect to the dual-pulse scheme as disclosed herein, a semiconductor optical amplifier (SOA) may replace the AOM (or EOM). In this regard, AOM may still be used as a pulser, but is no longer needed as a shifter.

With respect to the SOA, while AOM generates loss, SOA may generate gains.

With respect to the SOA, compared to the AOM that may be relatively larger in size and non-semiconductor material, SOA allows chip integration.

With respect to the SOA, SOA may include an improved extinction ratio compared to AOM.

According to examples disclosed herein, a direct control on laser frequency for dual-pulse distributed acoustic sensing (DAS) apparatus may include at least one laser to transmit a laser signal. A semiconductor optical amplifier (SOA) may be operatively connected to the at least one laser to generate a plurality of pulses. A laser signal controller that is executed by at least one hardware processor may apply, between two pulses of the plurality of pulses, a relatively small-step to obtain laser signal emitted changes of optical frequency. In this regard, a current change may be applied to a laser chip of the laser to obtain laser signal emitted changes of optical frequency.

For the direct control on laser frequency for dual-pulse DAS apparatus described above, the relatively small-step may be on an order of 0.5% of a magnitude of current applied to a laser chip of the laser.

The direct control on laser frequency for dual-pulse DAS apparatus described above may further include a circulator, operatively connected to the SOA to receive the laser signal from the SOA, and direct the laser signal from the SOA to a fiber under test (FUT).

The direct control on laser frequency for dual-pulse DAS apparatus described above may further include an avalanche photodiode (APD) operatively connected to the circulator to receive light reflected from the FUT.

The direct control on laser frequency for dual-pulse DAS apparatus described above may further include a multiplexer (MUX) operatively connected to the circulator to receive light reflected from the FUT. The MUX may separate and recombine the light injected to and reflected from the FUT based on a wavelength.

The direct control on laser frequency for dual-pulse DAS apparatus described above may further include a circulator, operatively connected to the SOA to receive the laser signal at a first wavelength and a first frequency, and a further laser signal at a second wavelength and a second frequency, and direct the laser signal and the further laser signal to a multiplexer (MUX) that may include an optical multiplexer. In this regard, with respect to the two lasers that are coupled together before the SOA, each of the lasers may be dual-pulsed simultaneously by the SOA. Each laser may include its own drive current and individual small-step on its drive current synchronously to imprint different frequency shifts in between the two pulses. The two lasers each dual-pulsed and optical frequency stepped in between the two pulses may be rooted to two different fibers by the optical MUX. The optical frequency step associated with the current step may be relatively small (e.g., 100's of MHz) compared to the MUX filter function (e.g., 10s of GHz), so that one pulse pair goes to one port, while the other pulse pair goes to the other port. The Rayleigh backscatter of the two pulses may interfere and create the intermediate RF frequency beat term. Both FUT backscatter may be recombined by optical MUX since there is one frequency shift for each laser, and one frequency beat for each fiber that may be demultiplexed electrically.

For the direct control on laser frequency for dual-pulse DAS apparatus described above, the MUX may direct the laser signal to a fiber under test (FUT) and the further laser signal to a further FUT.

The direct control on laser frequency for dual-pulse DAS apparatus described above may further include an avalanche photodiode (APD) operatively connected to the circulator to receive, based on the laser signal and the further laser signal, light reflected from the FUT and the further FUT.

The direct control on laser frequency for dual-pulse DAS apparatus described above may further include a multiplexer (MUX), operatively connected to the SOA to receive the laser signal at a first wavelength and a first frequency and another laser signal at a second wavelength and a second frequency, and direct the laser signal and the another laser signal via circulators to a fiber under test (FUT) and to another FUT.

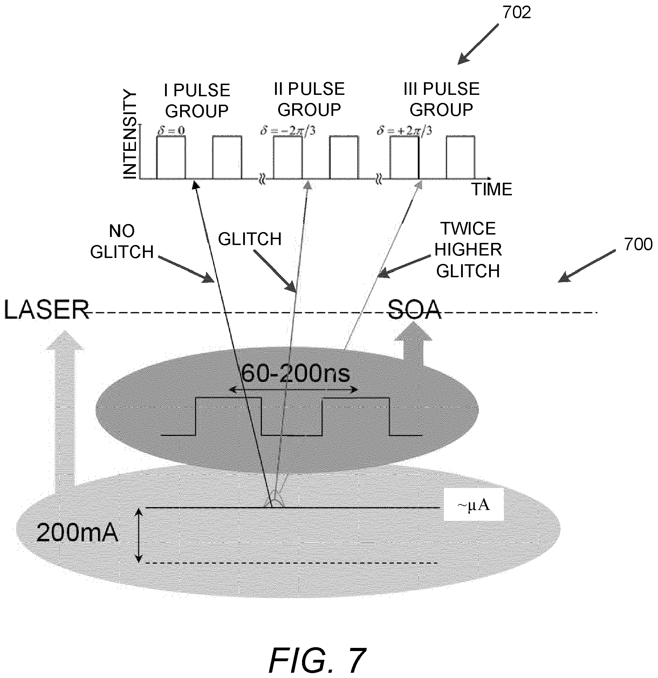

For the direct control on laser frequency for dual-pulse DAS apparatus described above, the SOA may be configured to induce a phase step between the two pulses. In this regard, a phase change as opposed to a frequency change may be introduced, for example, by acting on the laser or by acting on the SOA. A phase step in a laser light wave may be obtainable by sending a glitch to the laser in between two pulses applied on the SOA (e.g., Figure 7 as disclosed herein), where the glitch is applied on the laser (e.g., no glitch, glitch and twice higher glitch as shown in Figure 7, or possibly a sequence of negative glitch, no glitch and positive glitch). Current in the semiconductor chip influences the number of carriers at the junction and the optical index and therefore the optical path length in the chip. A sufficiently small glitch applied to the laser may therefore induce a phase jump without inducing a frequency shift. The same principle may be applied to obtain the desired phase change based on the precise drive signal applied onto the SOA. In this regard, three pulse pairs with different current combinations (e.g., medium-medium, high-low, and low-high) may be used to obtain the three required differential phase shifts. It may be needed to counter a differential chirp on the pulses created, with specific pulse profiles (e.g., two pulses at same height on a SOA will create the same chirp, thus no-differential-chirp, but with high-low and low-high configuration may bring in asymmetry and therefore a differential chirp). Further fine tuning may be performed by acting on a reverse bias level in between the pulses.

A method for direct control on laser frequency for dual-pulse distributed acoustic sensing (DAS) may include transmitting, by at least one laser, a laser signal. The method may further include generating, by a semiconductor optical amplifier (SOA) that is operatively connected to the at least one laser, a plurality of pulses. The method may further include applying, by a laser signal controller that is executed by at least one hardware processor, between two pulses of the plurality of pulses, a relatively small-step to obtain laser signal emitted changes of optical frequency.

For the method described above, the relatively small-step may be on an order of 0.5% of a magnitude of current applied to a laser chip of the laser.

The method described above may further include operatively connecting a circulator to the SOA to receive the laser signal from the SOA, and directing, by the circulator, the laser signal from the SOA to a fiber under test (FUT).

The method described above may further include receiving, by an avalanche photodiode (APD) that is operatively connected to the circulator, light reflected from the FUT.

The method described above may further include receiving, by a multiplexer (MUX) that is operatively connected to the circulator, light reflected from the FUT, and separating, by the MUX, the light reflected from the FUT based on a wavelength.

The method described above may further include receiving, by a circulator that is operatively connected to the SOA, the laser signal at a first wavelength and a first frequency, and a further laser signal at a second wavelength and a second frequency, and directing the laser signal and the further laser signal to a multiplexer (MUX).

The method described above may further include directing, by the MUX, the laser signal to a fiber under test (FUT) and the further laser signal to a further FUT.

The method described above may further include receiving, by an avalanche photodiode (APD) that is operatively connected to the circulator, based on the laser signal and the further laser signal, light reflected from the FUT and the further FUT.

The method described above may further include receiving, by a multiplexer (MUX) that is operatively connected to the SOA, the laser signal at a first wavelength and a first frequency and another laser signal at a second wavelength and a second frequency, and directing the laser signal and the another laser signal via circulators to a fiber under test (FUT) and to another FUT.

For the apparatuses and methods disclosed herein, the elements of the apparatuses and methods disclosed herein may be any combination of hardware and programming to implement the functionalities of the respective elements. In some examples described herein, the combinations of hardware and programming may be implemented in a number of different ways. For example, the programming for the elements may be processor executable instructions stored on a non-transitory machine-readable storage medium and the hardware for the elements may include a processing resource to execute those instructions. In these examples, a computing device implementing such elements may include the machine-readable storage medium storing the instructions and the processing resource to execute the instructions, or the machine-readable storage medium may be separately stored and accessible by the computing device and the processing resource. In some examples, some elements may be implemented in circuitry.

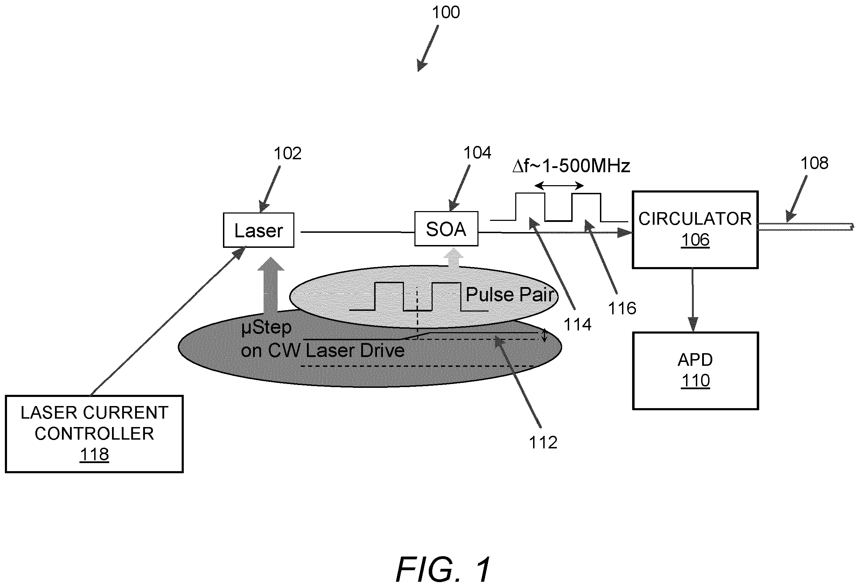

Figure 1 illustrates a layout of a direct control on laser frequency for dual-pulse DAS apparatus (hereinafter "apparatus 100"), in accordance with an example of the present disclosure.

Referring to Figure 1, the apparatus 100 may include a laser 102 operatively connected to a SOA 104. The SOA 104 may be operatively connected to a circulator 106 and generate a plurality of pulses. A fiber-under-test (FUT) 108 may be connected to the circulator 106. The circulator 106 that is operatively connected to the SOA 104 may receive the laser signal as disclosed herein and direct the laser signal to the FUT 108. The circulator 106 may be operatively connected to an avalanche photodiode 110 (APD). The APD 110 may receive light reflected from the FUT 108.

In operation, a mini-step 112 on the order of approximately 1 mA (e.g., on an order of 0.5% of a magnitude of current applied to a laser chip of the laser) may be applied to current applied to a laser chip of the laser 102 between two pulses (e.g., pulses 114 and 116) on the SOA 104. In this regard, a laser signal controller 118 that is executed by at least one hardware processor, may apply, between two pulses (e.g., pulses 114 and 116), a relatively small-step (e.g., the mini-step 112) to obtain laser signal emitted changes of optical frequency.

For the Φ-DAS based on dual-pulse technique, the mini-step 112 may be applied in between two pulses 114 and 116 on the SOA 104. The apparatus 100 may provide for RF tone filtering, amplification, and detection (e.g., gain of RF local oscillator). The apparatus 100 may also provide for utilization of the OTDR (e.g., including the laser) and I-DAS in addition to Phase-DAS.

With respect to target beat frequency and spatial resolution, utilization of the AOM may result in values of IF in the ~40MHz range. Dual AOM configurations may allow higher differential frequencies (e.g., one pulse obtained with a 200MHzAOM up-shift and one pulse obtained with a 200MHz AOM downshift, the two pulses recombined have a 400MHz relative shift). Several periods may be needed within one pulse in order to be able to define a phase, and may also provide increased accuracy. A low limit of IF frequency in the case of 3 periods may be 30ns: >100MHz, and 150ns: >20MHz. Effective spatial resolution may be set by overall dual-pulse duration. Access to high beat frequencies may be of prime importance to reach the highest spatial resolution (e.g., short pulses). Further, short pulses, and high beat frequencies, may improve the quality of the signal.

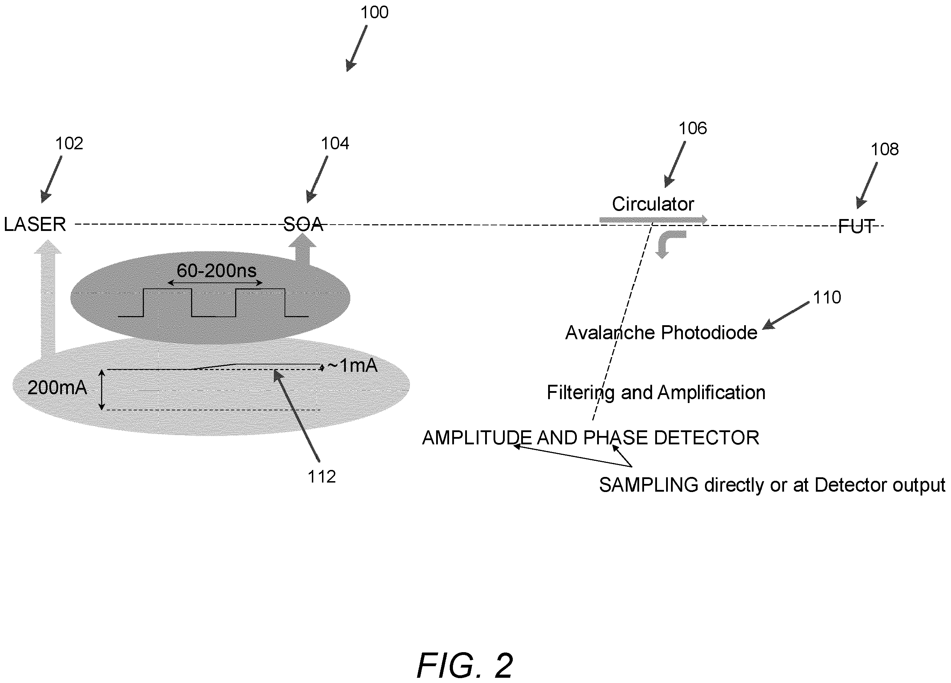

Figure 2 illustrates further details of the apparatus 100, in accordance with an example of the present disclosure.

Referring to Figure 2, the apparatus 100 is shown as including the laser 102 operatively connected to the SOA 104. The SOA 104 may be operatively connected to the circulator 106. The FUT 108 may be connected to the circulator 106. The circulator 106 may be operatively connected to the APD 110.

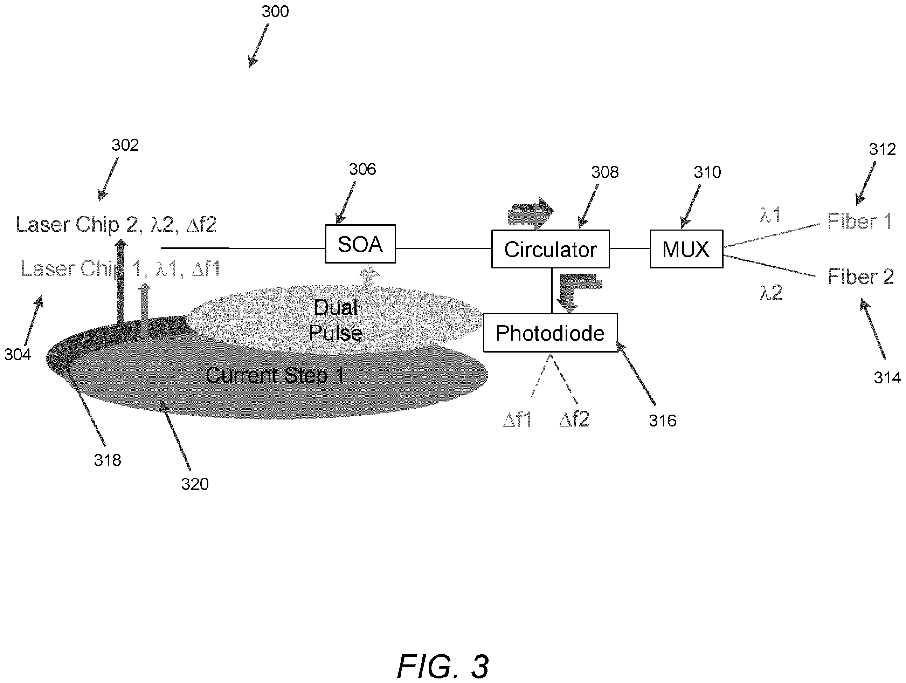

Figure 3 illustrates a dual-port layout of another example of a direct control on laser frequency for dual-pulse DAS apparatus (hereinafter "apparatus 300"), in accordance with an example of the present disclosure.

Referring to Figure 3, the apparatus 300 may include dual lasers 302 and 304, operatively connected to a SOA 306. The SOA 306 may be operatively connected to a circulator 308, which may be operatively connected to a multiplexer (MUX) 310. In this regard, the circulator 308 may receive the laser signal (e.g., from laser 304) at a first wavelength and a first frequency, and a further laser signal (e.g., from laser 302) at a second wavelength and a second frequency, and direct the laser signal and the further laser signal to the MUX 310. With respect to Figure 3, a laser at optical wavelength X may be turned into two pulses with a very slight optical wavelength or optical frequency shift X in between the two pulses. There is no RF frequency at this stage, only two pulses with a frequency shift. The RF beat at intermediate frequency X only may appear when the light from the two pulse light are mixed and interfere, as happens when pulses are backscattered in the fibre, at which point the RF beat may be seen on a photodiode. FUTs 312 and 314 may be connected to the circulator 308. The circulator 308 may be operatively connected to an APD 316. The MUX 310 may direct the laser signal to the FUT 312 and the further laser signal to a further FUT 314. The APD 316 may receive, based on the laser signal and the further laser signal, light reflected from the FUT 312 and the further FUT 314.

In operation, mini-steps 318 and 320 on the order of approximately 1 mA may be applied (e.g., by a laser signal controller similar to the laser signal controller 118) to a laser chip of the lasers 302 and 304 between two pulses (e.g., similar to pulses 114 and 116 of Figure 1) on the SOA 306. The lasers 304 and 302 may emit the wavelengths λ1 and λ2 at frequencies Δf1 and Δf2. In this regard, the wavelengths λ1 and λ2 may be respectively transmitted to FUTs 312 and 314, and detected by the APD 316.

The operation of the apparatus 300 may be compatible with simultaneous Raman DTS single band over one fiber (e.g., as disclosed in US Patent No. 10,775,246, titled "Single-Band Distributed Temperature Sensing", the disclosure of which is incorporated by reference) and allow permanent simultaneous vibration or fast accumulated strain change or fast accumulated temperature change together with absolute temperature measurements with a relatively simple hardware.

For the example of Figure 3, based on spectral hole-burning, several λ (e.g., λ1 and λ2) may provide for the extraction of more total optical power from SOA 306 compared to the utilization of a single λ. For the example of the apparatus 300, several input frequencies over a single fiber may provide for removal of a fading effect. Similarly, several pulses λ per fiber may provide for high-frequency acoustic sampling.

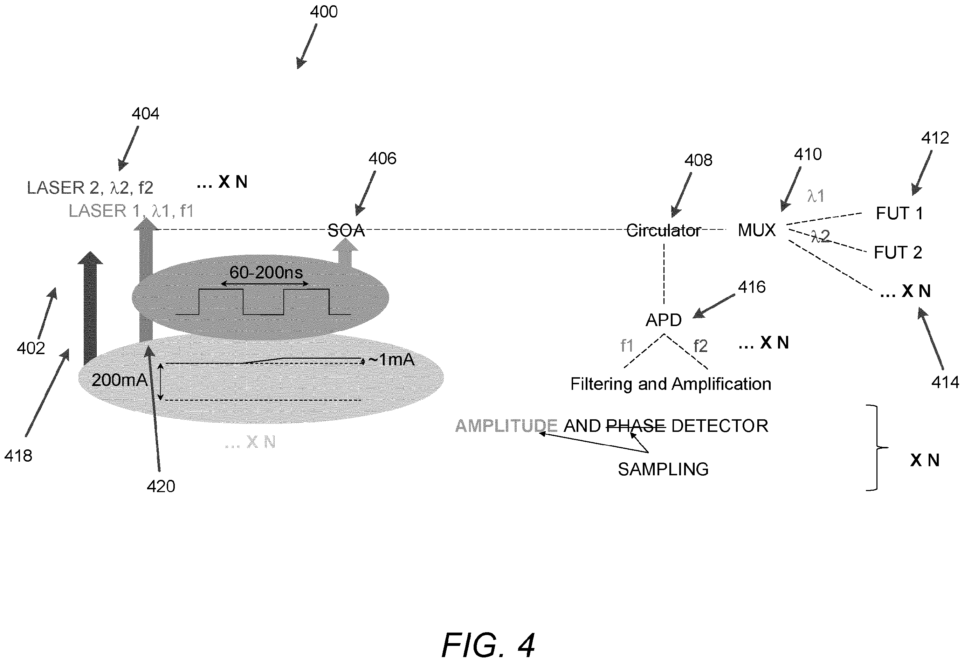

Figure 4 illustrates a multi-port layout of another example of a direct control on laser frequency for dual-pulse DAS apparatus (hereinafter "apparatus 400"), in accordance with an example of the present disclosure.

Referring to Figure 4, one optical head may perform parallel-OTDR on a WDM supervision network (e.g., where the MUX may or may not be integrated in the module). Alternatively one OTDR may average a single fiber signal faster (e.g., √*N* faster).

With reference to Figure 4, the apparatus 400 may include a plurality of lasers 402, 404, ..., laser-XN, operatively connected to a SOA 406. The SOA 406 may be operatively connected to a circulator 408, which may be operatively connected to a MUX 410. FUTs 412, 414, ..., FUT-XN may be connected to the circulator 408. The circulator 408 may be operatively connected to the APD 416.

In operation, mini-steps 418, 420, etc., on the order of approximately 1 mA may be applied (e.g., by a laser signal controller similar to the laser signal controller 118) to a laser chip of the lasers 402, 404, ..., laser-XN between two pulses (e.g., similar to pulses 114 and 116 of Figure 1) on the SOA 406. The lasers 404, 402, ..., laser-XN may emit the wavelengths λ1, λ2, ..., λN at frequencies Δf1, Δf2, ..., ΔfN. In this regard, the wavelengths λ1, λ2, ..., λN may be respectively transmitted to FUTs 412, 414, ..., FUT-XN and detected by the APD 416.

For the apparatuses 100, 300, and 400, with respect to variants, a classical chain of erbium-doped fiber amplifier (EDFA)/filters/Pin-Photodiode may replace the APD.

For the apparatuses 100, 300, and 400, with respect to variants, the signal may be sampled directly and beat term phase may be determined numerically as opposed to by utilizing an analogue RF phase/amplitude detector followed by a sampler.

For the apparatuses 100, 300, and 400, with respect to variants, the aforementioned step may be shaped so as to compensate for a transient effect and obtain a constant frequency shift during the second pulse.

For the apparatuses 100, 300, and 400, with respect to variants, depending on electronic design constraints and electronic and laser temporal response properties, µ-steps may be applied on the two pulses. For example, two µ-steps of the same sign but with slightly different amplitudes and profiles may be applied. In this regard, in order to shape a flat differential frequency step, the two pulses may independently have a complex frequency profile, provided that it is the same on two pulses. On the contrary, µ-steps of opposite signs but similar amplitude may be utilized, which would half the µ-step amplitude in each two events for a given frequency shift, while no additional energy is brought to the laser (e.g., during the pulse pair time and compared to a pure continuous drive), this procedure would facilitate faster re-stabilizing of the laser.

For the apparatuses 100, 300, and 400, with respect to variants, instead of directly applied current on a DFB, a µ-step may be applied onto any electro-optical control parameter of a laser that can modify its optical frequency on a 10ns time scale such as a phase section of a laser directly acting on a cavity length and the optical frequency of the lasing mode, or a voltage/current controllable optical frequency filter.

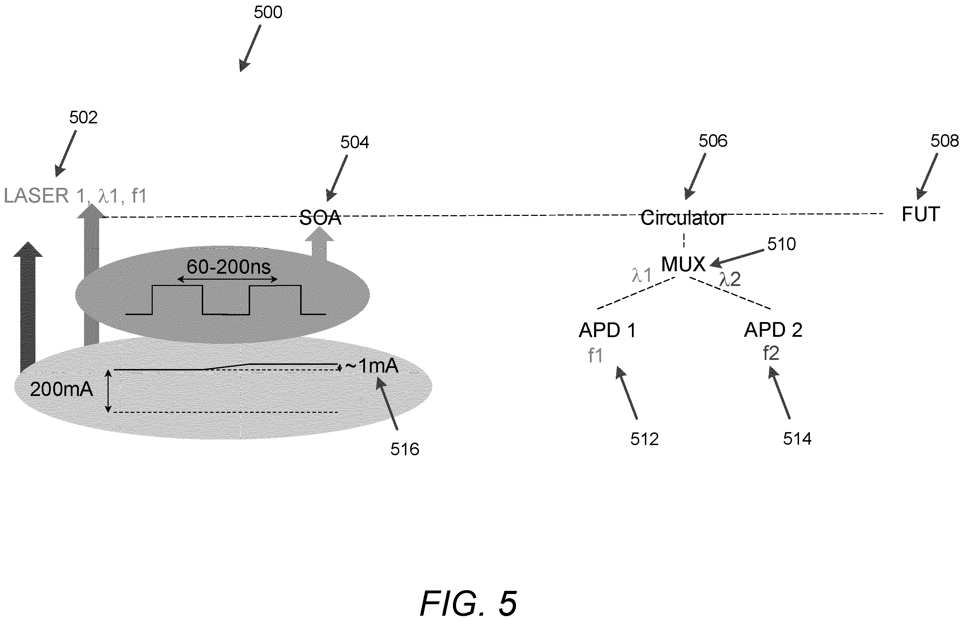

Figure 5 illustrates a multi-lambda variant of another example of a direct control on laser frequency for dual-pulse DAS apparatus (hereinafter "apparatus 600"), in accordance with an example of the present disclosure.

Referring to Figure 5, for the multi-lambda (e.g., λ) schemes described above, electrical demultiplexing may leave substantial crosstalks between channels/fibers. In this regard, the apparatus 500 may provide for demultiplexing optically to reduce crosstalk (one APD/detection chain per wavelength). This setup may be applicable for anti-fading or oversampled single fiber. Further, additional filtering with a narrow FBG filter may be implemented with further noise/crosstalk reduction.

Figure 5 shows the apparatus 500 including a laser 502, operatively connected to a SOA 504. The SOA 504 may be operatively connected to a circulator 506, which may be operatively connected to a FUT 508. The circulator 506 may be operatively connected to a MUX 510, which may be operatively connected to APDs 512 and 514. The MUX may receive light reflected from the FUT 508, and separate the light reflected from the FUT based on a wavelength (e.g., λ1 or λ2 as disclosed herein).

In operation, a mini-step 516 on the order of approximately 1 mA may be applied (e.g., by a laser signal controller similar to the laser signal controller 118) to current applied to a laser chip of the laser between two pulses (e.g., similar to pulses 114 and 116 of Figure 1) on the SOA 504. The laser 502 may emit the wavelength λ1 at frequency f1. In this regard, wavelengths λ1 and λ2 may be transmitted to FUT 508 and detected by the APDs 512 and 514.

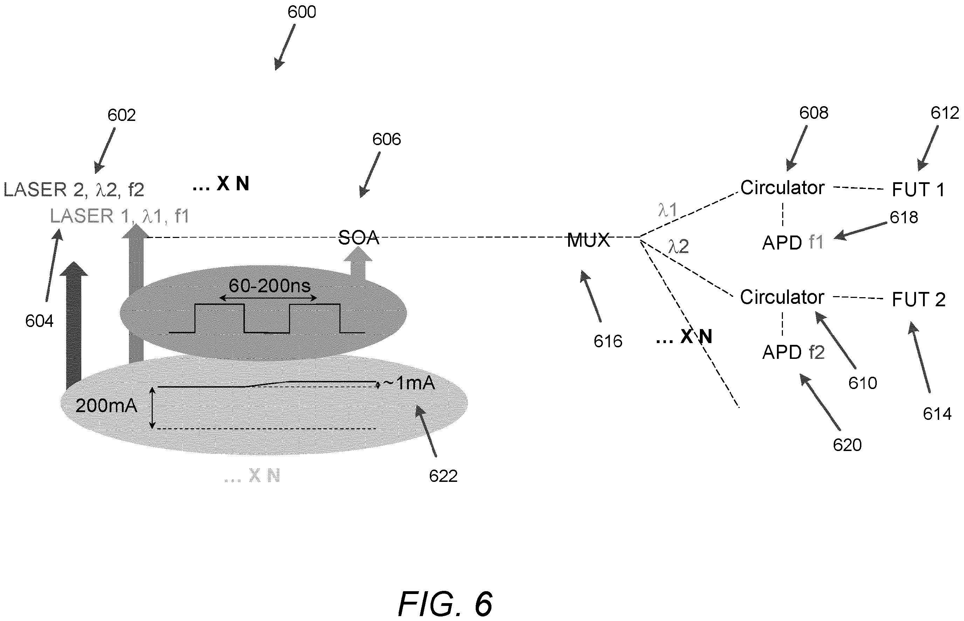

Figure 6 illustrates another multi-lambda (e.g., λ) variant of a direct control on laser frequency for dual-pulse DAS apparatus (hereinafter "apparatus 600"), in accordance with an example of the present disclosure.

Referring to Figure 6, with respect to multi-lambda variants, the signals may be demultiplexed before the circulator (e.g., one circulator, one photodiode, one detection chain per fiber tested).

Figure 6 shows the apparatus 600 including lasers 602, 604, ..., laser-XN operatively connected to a SOA 606. The SOA 606 may be operatively connected, via MUX 616, to circulators 608, 610, ..., circulator-XN, which may be operatively connected to FUTs 612, 614, ..., FUT-XN. The circulators 608, 610, ..., circulator-XN may be operatively connected to the MUX 616, and may be operatively connected to APDs 618, 620, ... , APD-XN. The MUX 616 may be operatively connected to the SOA 606 to receive the laser signal at a first wavelength and a first frequency and another laser signal at a second wavelength and a second frequency, and direct the laser signal and the another laser signal via circulators to the FUT 612 and to another FUT 614.

In operation, a mini-step 622 on the order of approximately 1 mA may be applied (e.g., by a laser signal controller similar to the laser signal controller 118) between two pulses (e.g., similar to pulses 114 and 116 of Figure 1) on the SOA 606 to obtain laser signal emitted changes of optical frequency. The lasers 602, 604, ..., laser-XN may emit the wavelengths λ1 at frequency f1, λ2 at frequency f2, etc. In this regard, wavelengths λ1, λ2, ..., λ-XN may be transmitted to FUTs 612, 614, ..., FUT-XN and detected by the APDs618, 620, ... , APD-XN.

Figure 7 illustrates a phase step variant of another example of a direct control on laser frequency for dual-pulse DAS apparatus (hereinafter "apparatus 700"), in accordance with an example of the present disclosure.

Referring to Figure 7, for the apparatus 700, a phase step may provide an alternative with lower potential compared to the frequency step. In this regard, a phase step may be induced in between two pulses to allow for recovery of phase from a series of three pairs of pulses as shown at 702, and at the cost of a lower acoustic sampling rate. A phase jump may be performed with an EOM phase-modulator. In one example, a phase step may be controllable through the SOA drive current value and shape for each of the two pulses in a pulse pair. In the example of Figure 7, three pulse pairs with different current combinations (e.g., medium-medium, high-low, and low-high) may be applied to obtain the three required differential phase shifts. It may be needed to counter some differential chirp on the pulses created, with specific pulse profiles. Two pulses at exact same height (e.g., medium-medium drive) on an SOA may create the same chirp, with the result being including no-differential-chirp. However, high-low and low-high pulse-pairs may have dissimilar current change rates and therefore a differential chirp detrimental to the measurement. A fine shaping of the two pulse profiles may then be used to mitigate the differential chirp. Further fine tuning may also be performed by acting on a reverse bias level in between the pulses.

In one example, a relatively small anomaly applied onto laser(s), in between two pulses, may result in a controlled phase change in the laser emission train. A momentary change of the current applied may change the index through carrier density and thermal effect, and induce the expected phase change in the emitted wave. In a similar manner as disclosed herein form the µ-step, a µ-pulse may be generated at full scale using a digital arbitrary waveform generator and attenuated before being added to the main continuous laser drive signal. A sufficiently small and short µ-pulse with a smooth, possibly Gaussian-like profile, applied right after the end of the first pulse may induce a phase change without inducing a frequency change on the next pulse. Rather than strictly positive or strictly negative glitches, two-phases alternative signals, first positive and then negative or opposite, with zero net value when integrated and therefore no extra energy brought to the laser may also be utilized to keep the optical frequency constant for all pulses.

As shown at 702, a minimum of three pairs of pulses, with phase changes of 0, 2pi/3, and -2pi/3 (each value may be modulo 2pi) may allow the recovery of phase from three local Rayleigh backscatter intensities.

The aforementioned variants discussed above with respect to frequency jump may be applicable to phase jump at the sole exception of the RF frequency decoding capability from a single receiver signal (e.g., Figures 3-4). Phase jump however may provide for intensity signal recovery and wavelength encoding capability. WDM may also be implemented, with multiple lasers utilizing multiple receivers (e.g., Figure 5 or 6).

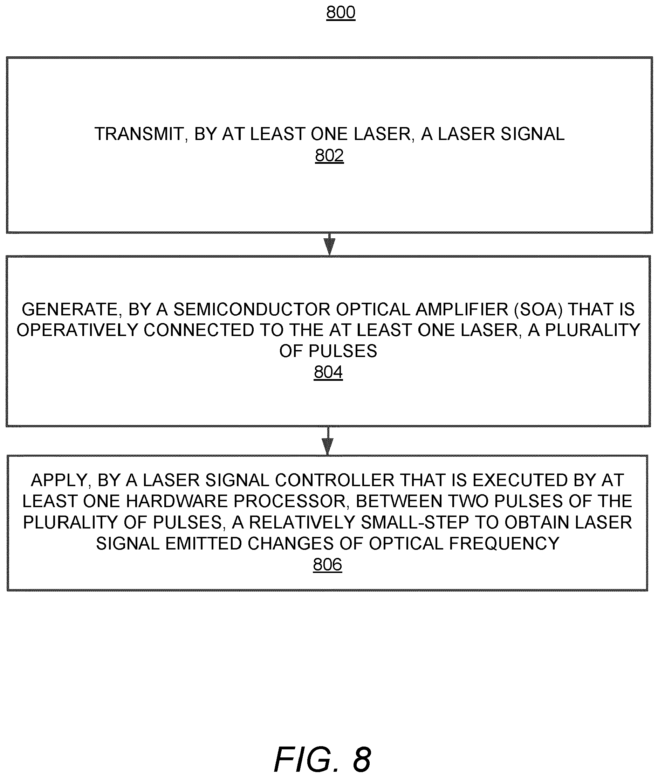

Figure 8 illustrates a flowchart of an example method 800, according to examples. The method 800 may be implemented on the apparatuses 100, 300, and 400 described above by way of example and not of limitation. The method 800 may be practiced in other apparatus. Figure 8 may represent an example method for direct control on laser frequency for dual-pulse DAS, and the steps of the method.

The methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory). The memory may include a RAM, where the machine readable instructions and data for a processor may reside during runtime.

Referring to Figures 1-8, and particularly Figure 8, for the method 800, at block 802, the method may include transmitting, by at least one laser, a laser signal.

At block 804, the method may include generating, by a semiconductor optical amplifier (SOA) that is operatively connected to the at least one laser, a plurality of pulses.

At block 806, the method may include applying, by a laser signal controller that is executed by at least one hardware processor, between two pulses of the plurality of pulses, a relatively small-step to obtain laser signal emitted changes of optical frequency.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -- and their equivalents -- in which all terms are meant in their broadest reasonable sense unless otherwise indicated.

## Claims

1. A direct control on laser frequency for dual-pulse distributed acoustic sensing (DAS) apparatus comprising:
at least one laser to transmit a laser signal;
a semiconductor optical amplifier, SOA, operatively connected to the at least one laser, to generate a plurality of pulses; and
a laser signal controller, executed by at least one hardware processor, to apply, between two pulses of the plurality of pulses, a relatively small-step to obtain laser signal emitted changes of optical frequency.

2. The direct control on laser frequency for dual-pulse DAS apparatus according to claim 1, further comprising:
a circulator, operatively connected to the SOA to receive the laser signal from the SOA, and direct the laser signal from the SOA to a fiber under test ,FUT.

3. The direct control on laser frequency for dual-pulse DAS apparatus according to claim 2, further comprising either:
an avalanche photodiode, APD operatively connected to the circulator to receive light reflected from the FUT; or
a multiplexer, MUX, operatively connected to the circulator to receive light reflected from the FUT,
wherein the MUX is to separate the light reflected from the FUT based on a wavelength.

4. The direct control on laser frequency for dual-pulse DAS apparatus according to claim 1, further comprising:
a circulator, operatively connected to the SOA to receive the laser signal at a first wavelength and a first frequency, and a further laser signal at a second wavelength and a second frequency, and direct the laser signal and the further laser signal to a multiplexer, MUX, and optionally.

5. The direct control on laser frequency for dual-pulse DAS apparatus according to claim 4, wherein the MUX is to direct the laser signal to a fiber under test, FUT, and the further laser signal to a further FUT and optionally further comprising an avalanche photodiode, APD, operatively connected to the circulator to receive, based on the laser signal and the further laser signal, light reflected from the FUT and the further FUT.

6. The direct control on laser frequency for dual-pulse DAS apparatus according to claim 1, further comprising:
a multiplexer, MUX, operatively connected to the SOA to receive the laser signal at a first wavelength and a first frequency and another laser signal at a second wavelength and a second frequency, and direct the laser signal and the another laser signal via circulators to a fiber under test, FUT, and to another FUT.

7. The direct control on laser frequency for dual-pulse DAS apparatus according to claim 1, wherein the at least one laser is controlled with respect to the SOA to induce a phase step between the two pulses.

8. A method for direct control on laser frequency for dual-pulse distributed acoustic sensing, DAS, the method comprising:
transmitting, by at least one laser, a laser signal;
generating, by a semiconductor optical amplifier, SOA, that is operatively connected to the at least one laser, a plurality of pulses; and
applying, by a laser signal controller that is executed by at least one hardware processor, between two pulses of the plurality of pulses, a relatively small-step to obtain laser signal emitted changes of optical frequency.

9. The method according to claim 8, further comprising:
operatively connecting a circulator to the SOA to receive the laser signal from the SOA; and
directing, by the circulator, the laser signal from the SOA to a fiber under test FUT.

10. The method according to claim 9, further comprising either:
receiving, by an avalanche photodiode, APD, that is operatively connected to the circulator, light reflected from the FUT; or
receiving, by a multiplexer, MUX, that is operatively connected to the circulator, light reflected from the FUT; and
separating, by the MUX, the light reflected from the FUT based on a wavelength.

11. The method according to claim 8, further comprising:
receiving, by a circulator that is operatively connected to the SOA, the laser signal at a first wavelength and a first frequency, and a further laser signal at a second wavelength and a second frequency; and
directing the laser signal and the further laser signal to a multiplexer, MUX.

12. The method according to claim 11, further comprising:
directing, by the MUX, the laser signal to a fiber under test, FUT, and the further laser signal to a further FUT; and optionally further comprising:
receiving, by an avalanche photodiode, APD, that is operatively connected to the circulator, based on the laser signal and the further laser signal, light reflected from the FUT and the further FUT.

13. The method according to claim 8, further comprising:
receiving, by a multiplexer, MUX, that is operatively connected to the SOA, the laser signal at a first wavelength and a first frequency and another laser signal at a second wavelength and a second frequency; and
directing the laser signal and the another laser signal via circulators to a fiber under test, FUT, and to another FUT.

14. The direct control on laser frequency for dual-pulse DAS apparatus according to claim 1 or the method according to claim 8, wherein the relatively small-step is on an order of 0.5% of a magnitude of current applied to a laser chip of the laser.

15. A direct control on laser frequency for dual-pulse distributed acoustic sensing , DAS, apparatus comprising:
at least one laser to transmit a laser signal;
a semiconductor optical amplifier, SOA, operatively connected to the at least one laser, to generate a plurality of pulses; and
a laser signal controller, executed by at least one hardware processor, to apply, between two pulses of the plurality of pulses, a relatively small-step on an order of 0.5% of a magnitude of current applied to a laser chip of the laser.
